# EUROPEAN PATENT APPLICATION

(11) **EP 1 329 299 A1**
(43) Date of publication of application: **23.07.2003**
(21) Application number: 02425018.5
(22) Date of filing: 21.01.2002
(51) Int. Cl.: B29C 44/56, B29C 70/66

(54) **Process for manufacturing meat trays**

(71) Applicant: COOPBOX EUROPE S.P.A., 42100 Reggio Emilia (IT)
(72) Inventor: Movilli, Walter, c/o CCPL Consorzio Cooperative, 42100 Reggio Emilia (IT)
(74) Representative: Corradini, Corrado

(57) **Abstract**

A process for manufacturing expanded polystyrene meat trays characterised by the following steps: plasticizing at a temperature higher than 200°C in an extruder a mixture comprising polystyrene, cellulation regulator materials, inert material in fine powder form and mineral oil; injecting an expanding agent into a zone of the extruder in which the various ingredients have already undergone homogenization; cooling the material to a constant temperature between 140°C and 160°C; extruding the material through a die; winding the sheet obtained by extrusion into rolls; maintaining the rolls at ambient temperature for a period from 1 to 30m days; heating the sheet to a temperature between 120°C and 180°C; thermoforming the sheet by drawing in moulds.

## Description

This patent concerns meat preservation in refrigerated environments in packs consisting of a tray of expanded synthetic material enclosed by a thin sheet also of synthetic material.

It relates in particular to the manufacture of the support trays, which must not only be of very low cost, being disposable, but must also be able to absorb the liquid which percolates from the fresh meat, consisting mainly of blood and water.

Expanded polystyrene is the material generally used to manufacture said trays, but this has virtually no capacity for absorbing liquids because of its closed cell structure and the fact that it is water-repellent.

Consequently the liquids which leave the meat gather on the base of the tray and after a certain time the meat remains partly immersed in its own liquid, so compromising proper preservation.

For these reasons, when constructing the trays, layers of absorbent cellulose material are laid on the tray base, or in other cases the trays are formed from expanded polystyrene/absorbent/expanded polystyrene sandwich structures.

In this latter case the expanded polystyrene layer forming the inner base of the tray is perforated to form a communication path towards the intermediate absorbent layer.

This procedure solves the problem, but is expensive because of its complicated construction.

The object of this invention is to provide trays of expanded polystyrene which, although maintaining the characteristics of known trays in terms of cost and constructional simplicity, eliminate the aforesaid drawback. Hence the object of the invention is to render the tray absorbent, without the aid of cellulose materials.

This result is attained, according to the invention, by firstly rendering the expanded polystyrene hydrophilic and then creating, within the cell structure of the expanded polystyrene, passages which enable liquids to penetrate into the wall of the tray.

The polystyrene is rendered hydrophilic by the addition of sodium alkyl-(C₁₀-C₁₈)-sulphonate.

This additive is available commercially in the form of a master batch concentrate and is normally used as an antistatic additive for polystyrene. The antistatic action is due to its surfactant properties which render the surface wettable, with resultant dispersion of electrostatic charges.

In our case the same action mechanism is used to enable the liquids to infiltrate into the cavities contained in the tray cell structure.

According to the invention, passages are formed providing communication between the various constituent cells of the expanded structure so that all the empty spaces, representing about 95% of the apparent volume of the tray material, become a single vessel within which the liquids collect.

This result is achieved, according to the invention, by adding glass microbeads in addition to the normal talc, citric acid and sodium carbonate additives used to regulate the cell structure.

The process of the invention consists of two stages, the first of which consists of making an expanded sheet by an extrusion process with gas injection, and the second of which consists of thermoforming said sheet and separating portions thereof to form the individual trays therefrom.

A mixture consisting of the base resin (polystyrene), cellulation regulators (talc or citric acid and sodium bicarbonate mixtures), glass microbeads and possibly mineral oil in a quantity, varying between 0.1 and 2%, sufficient to stably bind the various ingredients together, is fed into the hopper of an extruder.

In the interior thereof the said mixture is plasticized by heating to more than 200°C, and homogenized by mechanical action.

Into an extruded region in which homogenization of the various ingredients has already taken place, an expanding agent, in our case butane, or any one of the normally used expanding agents, is injected; this latter is then homogenized with the remainder of the mixture.

The material is then cooled to a temperature of between 140 and 160°C and temperature-controlled thereat, after which it leaves through an aperture (die) having a circular ring cross-section.

The product hence assumes a tubular form which is cooled and sized by running it over a metal mandrel.

At the end of the mandrel, known as the bell, the tube is cut along one or two generators and then opened and spread out in the form of a sheet.

As the dragging speed increases, the weight per unit of surface area of the obtained sheet decreases for equal material exit rates from the die, and vice versa, so that in addition to advancing the material external to the extruder by overcoming the friction along the bell, the dragging also serves as a sheet density regulator.

The sheet is then wound into rolls.

The sheet extrusion and forming process is totally identical to those normally used for non-absorbent sheets.

The extruder used can be one of the three types normally used for this technology, i.e. a two-screw extruder with co-rotating screws, a single one-screw extruder, or a tandem extruder.

This latter type of extruder consists of a combination of two extruders positioned in series, of which the first implements the plasticizing, homogenizing and expanding agent injection steps, and the second implements the cooling and temperature control steps.

When the material leaves the die, the gas dissolved therein is released to form a large number of bubbles which expand to form a foam with its cavities (cells) bounded by very thin walls formed from the plastic material. The glass microbeads inserted into the mixture act in this stage of the process as extraneous corpuscles which, unable to follow the stretching of the walls between the cells, result in their perforation to hence create communication passages between adjacent cells.

A portion of said microbeads remains however incorporated in the thickness of the cell walls without causing any perforation, because in this stage many cell walls have a thickness greater than the dimension of the glass microbeads.

The expanded sheet obtained can be used as such or be covered with a compact polystyrene sheet on both surfaces. This operation can be carried out by co-extrusion, by rolling with previously produced film or by flat head pouring and rolling in-line.

At the end of the extrusion process the sheet is wound into rolls and left to stand for a curing period of between one day and some weeks, depending on its width, its thickness, the density of its constituent material, the roll diameter and the tension between the sheet turns in the rolls.

During curing, the sheet constituent material cools to ambient temperature, the gas contained in the cells also cooling therewith.

Because of the temperature decrease the gas contained in the cells again partly dissolves in the material, with the result that the internal pressure is decreased.

As polystyrene is a gas-permeable material, air slowly enters the cells during the curing period until the external and internal partial pressures are balanced.

After a convenient curing period, such as to complete the described process, the trays are thermoformed.

This stage consists of heating the sheet to replasticize it and render it formable by drawing using suitable moulds.

During this heating, to a temperature between 120°C and 180°C, the so-called post-expansion phenomenon occurs.

During the heating the sheet increases its thickness because of release of the expanding agent which had been dissolved in the polymer and the rapid thermal expansion thereof and of the air which has entered the cells during the curing process.

On termination of this stage the final sheet thickness can reach up to double its initial thickness.

During the post-expansion stage, simultaneously with the cell swelling there occurs stretching and thinning of their walls, as a consequence of which the glass microbeads which have remained incorporated into the thickness of the walls assume a dimension greater than the thickness of these, so completing their perforation to hence achieve an open cell structure.

This phenomenon occurs only in the interior of the material, and not at its surface.

The tray inner surface can be perforated by perforating the sheet either before or after thermoforming.

In the second case it is convenient during thermoforming to apply vacuum both to the female and to the male side of the mould, instead of only to the female side, as occurs in the normal process.

In this manner a larger and more constant tray thickness can be achieved than normally, with an added advantage in terms of absorption capacity and improved mechanical strength.

For a good process result a polystyrene is suggested having a Melt Flow Index (called M.F.I. hereinafter) between 1.2 and 3.5 (grams per 10 minutes).

As nucleating additives, the invention uses those additives used to produce closed-cell expanded polystyrene sheets.

The glass microbeads, the purpose of which is to create the apertures between cells must according to the invention have an average particle size preferably between 10 and 60 microns and are added in a quantity between 0.5% and 5% by weight.

By suitably choosing the quantity of nucleating additives and microbeads the absorption capacity of the sheet and consequently of the trays is influenced. Specifically, absorption increases with increase in one or both of these components.

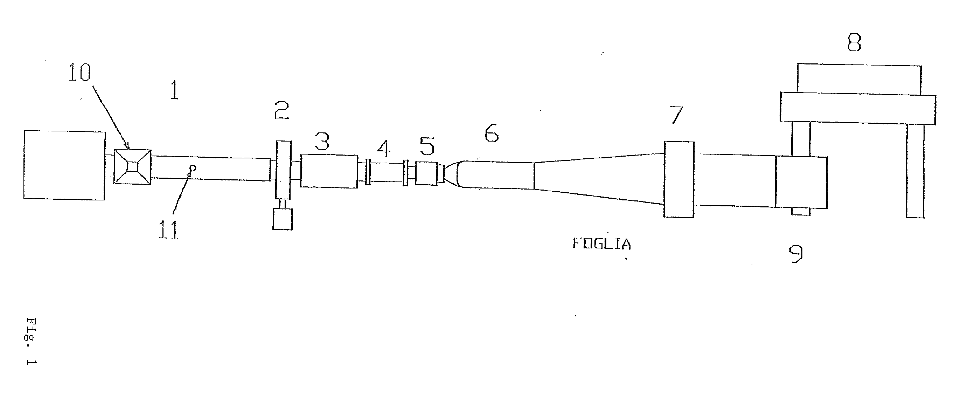

The characteristics of the invention will be more apparent from the ensuing description of two embodiments with the aid of the accompanying drawing, in which Figure 1 schematically illustrates an extruder.

An extruder 1 with two co-rotating screws is used having a diameter of 132 mm and an L/D ratio of 24.

It is equipped with a filter changer 2, an oil heat exchanger 3, a static mixer 4 and an exit die 5.

The die has a diameter of 88 mm and an aperture of 1 mm.

A cooling ring maintained at constant temperature by water from a temperature-controlled source is positioned downstream of the die. between this latter and the metal sizing mandrel 6, also known as a bell, which has a diameter of 365 mm and an axial length of 800 mm.

The material is fed into the extruder via the hopper indicated by 10.

The expanding agent is fed into the extruder at the point indicated by 11.

The extruded sheet is dragged by a roller dragger 7 and wound on a reel 9 by a winder 8.

The material used in the examples has the following composition:

| | **EXAMPLE 1** | **EXAMPLE 2** |
|---|---|---|
| **Material** | **parts by weight** | **parts by weight** |
| crystalline polystyrene | 100 | 100 |
| talc | 0.50 | 0.50 |
| hydrocerol compound | 0.33 | 0.27 |
| glass microbeads | 2.00 | 1.00 |
| Antistatic concentrate (masterbatch) | 3.33 | 3.33 |
| vaseline oil | 0.67 | 0.67 |

in which the polystyrene has a Melt Flow Index of 1.2; the hydrocerol compound is a masterbatch produced by Boeringer and contains a mixture of citric acid and sodium bicarbonate; the glass microbeads have an average particle size of 20 micron; the antistatic masterbatch comprises 50% of polystyrene and 50% of sodium alkyl-(C₁₀-C₁₈)-sulphonate.

The following composition was used as the expanding agent:

| | |
|---|---|
| normal butane | 67 parts by weight |
| isobutane | 30 parts by weight |
| propane | 3 parts by weight |

The extruder is operated in both Example 1 and Example 2 in accordance with the following operating conditions:

| | |
|---|---|
| Temperature at melting zone | 260°C |
| Temperature at first cooling zone | 118°C |
| Temperature at second cooling zone | 108°C |
| Temperature at filter changer | 145°C |
| Temperature at heat exchanger | 143°C |
| Temperature at static mixer | 145°C |
| Temperature at die | 120°C |
| Temperature at cooling ring | 40°C |
| Rotation speed of screws | 25 r.p.m. |
| Hourly production | 200 kg/h |
| Expanding agent injected | 4.25% |

In both examples the product obtained is an expanded polystyrene sheet having a thickness of 5 mm and a weight of 280 g/m², i.e. a density of 56 g/litre.

The absorption capacity of the two cases, expressed in grams of water/m², is as follows:

| | |
|---|---|
| Example 1 | 1800 g/m² |
| Example 2 | 1300 g/m² |

After curing at ambient temperature for 5 days, the sheet, previously perforated on the side corresponding to the tray interior, was thermoformed by a traditional system, i.e. by vacuum applied only to the female side of the mould, trays being obtained of dimensions 223 x 182 mm, a depth of 21 mm and a thickness of 4.5 mm.

The liquid absorption capacity was as follows:

| | |
|---|---|
| Example 1 | 60 g/tray |
| Example 2 | 45 g/tray |

## Claims

1. A process for manufacturing expanded polystyrene meat trays **characterised by** the following steps:
- plasticizing at a temperature higher than 200°C in an extruder a mixture comprising polystyrene, cellulation regulator materials, inert material in fine powder form and mineral oil;
- injecting an expanding agent into a zone of the extruder in which the various ingredients have already undergone homogenization;
- cooling the material to a constant temperature between 140°C and 160°C;
- extruding the material through a die;
- winding the sheet obtained by extrusion into rolls;
- maintaining the rolls at ambient temperature for a period from 1 to 30 days;
- heating the sheet to a temperature between 120°C and 180°C;
- thermoforming the sheet by drawing in moulds.

2. A process as claimed in claim 1, **characterised in that** the polystyrene has a Melt Flow Index (M.F.I.) between 1.2 and 3.5 g/10 min.

3. A process as claimed in claim 1, **characterised in that** the cellulation regulator materials are chosen from talc, citric acid and sodium bicarbonate, either individually or mixed together.

4. A process as claimed in claim 1, **characterised in that** the inert material consists of glass microbeads having an average particle size between 10 micron and 60 micron.

5. A process as claimed in claim 1, **characterised in that** the mineral oil constitutes from 0.1% to 2.0% of the mixture.

6. A process as claimed in claim 1, **characterised in that** the mixture comprises from 1.5% to 2% by weight of sodium alkyl-(C₁₀-C₁₈)-sulphonate.

7. A process as claimed in claim 1, **characterised in that** the expanding agent is chosen from normal butane, isobutane and propane.

8. A process as claimed in claim 1, **characterised in that** the expanding agent is a mixture containing the following parts by weight: normal butane 67, isobutane 30 and propane 3.

9. A process as claimed in claim 1, **characterised in that** the mixture has the following composition:
| | |
|---|---|
| crystalline polystyrene | 100 parts by weight |
| talc | 0.35 to 0.50 parts by weight |
| hydrocerol compound | 0.27 to 0.33 parts by weight |
| glass microbeads | 1 to 2 parts by weight |
| antistatic concentrate (masterbatch) | 3.33 parts by weight |
| vaseline oil | 0.67 parts by weight |
in which the polystyrene has a Melt Flow Index of 1.2;
the hydrocerol compound is a masterbatch produced by Boeringer and contains a mixture of citric acid and sodium bicarbonate;
the antistatic masterbatch comprises 50% of polystyrene and 50% of sodium alkyl-(C₁₀-C₁₈)-sulphonate.

10. A process as claimed in claim 1, **characterised in that** the extruder is operated in accordance with the following operating conditions:
| | |
|---|---|
| Temperature at melting zone | 250-300°C |
| Temperature at first cooling zone | 110-125°C |
| Temperature at second cooling zone | 105-110°C |
| Temperature at filter changer | 145-155°C |
| Temperature at heat exchanger | 135-150°C |
| Temperature at static mixer | 145-155°C |
| Temperature at die | 120°C |
| Temperature at cooling ring | 40°C |
| Rotation speed of screws | 20-26 r.p.m. |
| Expanding agent injected | 4.25% |

11. A process as claimed in claim 10, **characterised in that** the extruder is operated in accordance with the following operating conditions:
| | |
|---|---|
| Temperature at melting zone | 260°C |
| Temperature at first cooling zone | 118°C |
| Temperature at second cooling zone | 108°C |
| Temperature at filter changer | 145°C |
| Temperature at heat exchanger | 143°C |
| Temperature at static mixer | 145°C |
| Temperature at die | 120°C |
| Temperature at cooling ring | 40°C |
| Rotation speed of screws | 25 r.p.m. |
